# EUROPÄISCHE PATENTSCHRIFT

(11) **EP 0 841 002 B1**
(45) Veröffentlichungstag und Bekanntmachung des Hinweises auf die Patenterteilung: **20.03.2002**
(21) Anmeldenummer: 97118667.1
(22) Anmeldetag: 28.10.1997
(51) Int. Cl.: A01G 1/04

(54) **Verfahren und Vorrichtung zur Herstellung von Kultursubstrat für den Anbau von Pilzkulturen**
Process and device for producing a substrate for the cultivation of mushrooms
Méthode et appareil pour produire un substrat pour la culture des champignons

(30) Priorität: 06.11.1996 DE 19645609
(43) Veröffentlichungstag der Anmeldung: 13.05.1998
(73) Patentinhaber: MESSER GRIESHEIM GMBH, 60547 Frankfurt (DE)
(72) Erfinder: Beutler, Hans-Josef, 47669 Wachtendonk (DE); Böckler, Thomas, 47807 Krefeld (DE)

(56) Entgegenhaltungen:
- EP-A- 0 483 655
- DE-A- 2 439 510
- US-A- 2 592 711
- US-A- 4 261 137
- CHRISTIAENS: "Technik neuer Verfahren in der Substratherstellung" DER CHAMPIGNON, Nr. 2, 18. Oktober 1996, Seiten 80-85, XP002084365
- VAN LIER ET AL.: "Composting of mushroom substrate in a fermentation tunnel: compost parameters and a mathematical model" NETHERLANDS JOURNAL OF AGRICULTURAL SCIENCE, Bd. 42, Nr. 4, 1994, Seiten 271-292, XP002084366
- PATENT ABSTRACTS OF JAPAN vol. 016, no. 431 (C-0983), 9. September 1992 & JP 04 148621 A (MASAMOTO KAMIKO), 21. Mai 1992

## Beschreibung

Die Erfindung betrifft ein Verfahren zur Herstellung von Kultursubstrat für den Anbau von Pilzkulturen nach dem Oberbegriff des Anspruchs 1 sowie eine zur Durchführung des Verfahrens geeignete Vorrichtung nach dem Oberbegriff des Anspruchs 8.

Kultursubstrate für den Anbau von Pilzkulturen, insbesondere für den Champignonanbau, werden aus organischen Stoffen, insbesondere aus Pferdemist und Stroh unter Zusatz von Hühnermist als Stickstoffquelle, hergestellt. Das Herstellungsverfahren besteht aus zwei Schritten. Am Anfang wird in einer offen gelagerten Miete eine Heißrotte durchgeführt (Verfahrensstufe I). Dabei wird im Verlauf von ca. einer Woche durch mehrmaliges maschinelles Umsetzen unter Zusatz von Wasser der mikrobielle Stoffumsatz so gefördert, daß ein homogenes Rohkultursubstrat entsteht. Dieses kann nach abermaligem Wasserzusatz portioniert in Kisten, die ca. 200 kg fassen und in einem klimatisierten Raum aufgestellt werden, oder als Masse in einen Tunnel mit einem Fassungsvermögen von ca. 70 bis 100 m³ eingefüllt werden. Das Rohkultursubstrat wird anschließend in dem geschlossenen System für ebenfalls ca. acht Tage einer definierten Wärmebehandlung unterworfen (Verfahrensstufe II).

Nach der Überführung des Rohkultursubstrats in das geschlossene System wird durch eine mehrstündige Ruhephase ein Temperaturausgleich im Substratgemenge durchgeführt, bevor unter Verwendung von Umluft die Temperatur durch Aufheizen bzw. Selbsterhitzung des Rohkultursubstrats bis auf ca. 60 °C eingestellt wird und danach aufrechterhalten wird, um die Schadfauna und Schadflora abzutöten (Pasteurisation). Danach wird durch Einspeisung von Frischluft die Temperatur auf ca. 48 °C erniedrigt und zwei bis drei Tage gehalten (Konditionierung), um bei dem angestrebten PH-Wert um PH 7,5 Ammoniumstickstoff an die organische Substanz zu binden, da das Pilzmyzel nur sehr wenig freies Ammoniak im Kultursubstrat toleriert. Anschließend wird das fertige Kultursubstrat auf 25 °C abgekühlt und mit Pilzbrut beimpft.

Die Heißrotte in der offenen Miete im Champignonanbau ist technisch einer Reaktor-Intensivrotte ähnlich. Die Behandlung des Pilzkultursubstrats in einem geschlossenen System entspricht hingegen einer offenen Nachrotte für Bioabfall, welche in der Regel nach der Reaktor-Intensivrotte durchgeführt wird. Diese Vertauschung der Verfahrensschritte hat weitreichende Folgen für die Handhabung des Rotteprozesses. Der unterschiedliche Status der Rottegemenge und der phasenverschobene Stoffumsatz der Biozönosen stellen Ansprüche an die Verfahrensführung und Regelungstechnik bei der Herstellung von Kultursubstraten für den Pilzanbau, die sich von denen bei der Kompostierung von Bioabfall deutlich unterscheiden.

Das Pilzkultursubstrat besitzt nach Abschluß der offenen Heißrotte eine homogene Struktur und kann wegen der kapillaren Wassereinlagerung auf eine Maximalfeuchte von 80 % eingestellt werden. Die bereits verminderte mikrobielle Aktivität führt zu einer Temperaturerhöhung, die trotz des relativ hohen Luftdurchsatzes, zum Beispiel 240 m³/h/t, durch Kühlung mit Frischluft beherrscht werden kann. Nach acht Tagen beträgt der Wasserverlust ca. 10 %.

Originäre Rottegemenge aus Bioabfall verschiedener Art nehmen dagegen kapillar sehr viel weniger Wasser auf und heizen sich rasch auf. Wird die Wärme durch einen hohen Luftdurchsatz abgeführt, trocknet das oberflächig nasse Material in wenigen Tagen aus. Daher muß die Bioprozeßführung bei der Kompostierung von Bioabfall behutsamer vorgenommen werden.

In letzter Zeit ergeben sich Forderungen an den Champignonanbau, auch die gesetzlichen Auflagen zum Betreiben von Kompostierungsanlagen für Bioabfall zu erfüllen. Dies führte zu Bemühungen, die offene Mietenrotte (Verfahrensstufe I) in eine Tunnelbehandlung zu integrieren.

Trotz gemeinsamer Merkmale stellt die Herstellung des Kultursubstrats für den Pilzanbau eine Besonderheit eines Rotteverfahrens von organischen Stoffe dar. Denn innerhalb von ca. vierzehn Tagen muß ein Substrat erzeugt werden, das bei PH-Werten zwischen 7 und 8 weitestgehend frei von Ammoniak sein muß und einen hohen Wassergehalt (ca. 70 bis 80 %) besitzt. Dieser Zustand läßt sich nur erreichen, wenn der Rotteprozeß intensiv verläuft.

Nach dem Stand der Technik wird das frische Startgemenge in einen Tunnel eingefüllt und der Selbsterhitzung überlassen (Verfahrensstufe I). Dabei treten Temperaturen von größer als ca. 70 °C auf. Durch hohe Ammoniakgehalte in der Umluft wird das spröde Stroh angegriffen.

Durch die hohen Temperaturen während der Heißrotte wird die Biozönose stark geschädigt. Daher wird das Rohkultursubstrat aus dem Tunnel (Verfahrensstufe I) in einen weiteren Tunnel für den folgenden Rotteprozeß (Verfahrensstufe II) gefüllt. Dabei werden ca. 10 bis 20 % "mikrobiell intaktes" Kultursubstrat zugemischt. Die Bezeichnung "mikrobiell intaktes" Kultursubstrat bedeutet hier, daß das Kultursubstrat wieder mit der Nutzflora angeimpft wird.

Während der Verfahrensstufe II wird die Temperatur in den beschriebenen Grenzen gehalten. Anstelle der Überführung des Rohkomposts in einen Tunnel kann hier auch eine Kistenbefüllung stattfinden.

Bei der Behandlung des Kultursubstrats während der Verfahrensstufe II im Tunnel durchströmt die klimatisierte Umluft die Miete; der Kompost in Kisten wird von der klimatisierten Umluft umströmt. Der Gasaustausch erfolgt durch Konvektion und ist entsprechend träge. Mit diesen Verfahren lassen sich keine optimalen Verhältnisse für die Substratherstellung einstellen.

Heute wird die Heißrotte (Verfahrensstufe I) in vielen Betrieben des Pilzanbaus noch in der offenen Miete durchgeführt. In Großbetrieben, die wöchentlich mehr als 500 t Kultursubstrat herstellen, wird in letzter Zeit versucht, mit Belüftungssträngen, die unterhalb der Miete verlaufen, die Ausbildung anaerober Zonen in der Miete zu vermeiden. Dadurch kann, vor allem bei Gemengen die Stroh und Hühnermist enthalten, eine Geruchsbildung vermindert werden. Aber diese Verminderung ist oftmals zu gering, um die ständig höher werdenden gesetzlichen Auflagen zu erfüllen. Daher ist es notwendig, die Mieten von der Umgebung zu trennen und die Substratherstellung beispielsweise in geschlossenen Hallen durchzuführen und die Abluft zu reinigen. Derartige Lösungen sind technisch relativ aufwendig und verursachen relativ hohe Investitions- und Betriebskosten.

Der Erfindung liegt die Aufgabe zugrunde, ein Verfahren und eine Vorrichtung zu schaffen, mit dem/der die Rottezeit verkürzt wird, eine Geruchsemission von übelriechenden Stoffen weitestgehend verhindert wird und mit dem die Zugabe an Stickstof reduziert werden kann. Der dafür erforderliche technische Aufwand soll relativ gering sein.

Ausgehend vom Oberbegriff des Anspruchs 1 ist die Aufgabe gelöst mit den im kennzeichnenden Teil des Anspruchs 1 angegebenen Verfahrensmaßnahmen sowie den im kennzeichnenden Teil des Anspruchs 8 angegebenen Vorrichtungsmerkmalen.

Mit dem erfindungsgemäßen Verfahren und der Vorrichtung ist es möglich, die Startzeit des Verrottungsprozesses in der Verfahrensstufe I, daß bedeutet die Zeitdauer bis zum Einsetzen des biologischen Abbauvorgangs, um ca. 30 bis 50 % zu verkürzen. Damit verbunden erfogt der Anstieg der Temperatur auf ca. 70°C rascher und der biologische Stoffumsatz wird erhöht. Mit Hilfe des erfindungsgemäßen Verfahrens bildet sich eine gegenüber den Verfahren nach dem Stand der Technik erhöhte Konzentration an Sauerstoff in dem Kultursubstrat aus, was dazu führt, daß eine Ausbildung anaerober Bereiche verhindert oder zumindest reduziert wird. Außerdem wird die Bildung von übelriechenden Stoffen reduziert, Ammoniak wird stärker gebunden und die Emission von unerwünschten Spurengasen, insbesondere von Methan und Distickstoffoxid, wird verringert. Auf eine aufwendige Reinigung der Abluft kann zumindest teilweise verzichtet werden und die Menge an zuzugebendem Stickstoff, beispielsweise in Form von Hühnermist oder künstlichem Dünger, ist deutlich geringer.

Die zuvor genannten Vorteile durch das erfindungsgemäße Verfahren und die Vorrichtung ergeben sich im Grundsatz für alle denkbaren Arten der Lagerung des Substratgemenges, beispielsweise für Mieten auf einer befestigten Fläche im Freien, in einer offenen, halboffenen oder geschlosenen Halle oder in einem Tunnel sowie für alle denkbaren Arten der Ausbildungen und Dimensionierung der Miete selbst.

Vorteilhafte Weiterbildungen des erfindungsgemäßen Verfahrens sowie der Vorrichtung sind in den Patentansprüchen 2 bis 7 sowie 9 bis 13 angegeben.

### Beispiel:

Es wurde ein Stroh-Pferdemist-Hühnermist-Gemenge als Substratrohstoff verwendet. Das Gemenge wurde gründlich durchmischt und bewässert und in drei Abschnitte einer Miete (Abschnitt a, b und c) mit jeweils einer Länge von 2 m, einer Breite von 1,5 m und einer Höhe von 1,5 m innerhalb einer äußeren Verschalung aus Holz eingefüllt, wobei die einzelnen Abschnitte der Miete ebenso durch eine Holzwandung voneinander getrennt wurden. Den Abschnitten a und b wurde als sauerstoffhaltiges Gas mit Sauerstoff angereicherte Luft mit einem Sauerstoffgehalt von 25 Vol.-% zugeführt. Der Abschnitt c wurde zu Vergleichszwecken nicht begast. Zur Zufuhr wurde der Abschnitt a mit drei Belüftungsrohren in der Nähe der Basisfläche der Miete versehen, welche in einem Abstand von 10 cm über dem Boden und mit einem Abstand zwischen jeweils zwei benachbarten Rohren von 50 cm angeordnet waren. Im Abschnitt b der Miete wurden ebenfalls in der Nähe der Basisfläche die drei Belüftungsrohre, wie zuvor beschrieben wurde, angeordnet und zusätzlich wurde ein Belüftungsrohr in der Mitte der Miete und in einem Abstand zum Boden von 80 cm eingesetzt.

Die Belüftungsrohre wurden so gestaltet, daß das sauerstoffhaltige Gas über die gesamte Rohrlänge gleichmäßig eingeblasen werden konnte und daß der Druckabfall über die Länge der Rohre vemachlässigbar gering war. Beispielsweise wurden Belüftungsrohre mit einem Durchmesser von 50 mm verwendet, die mit einer Lochreihe, bestehend aus 19 Bohrungen mit einem Durchmesser von 3 mm, versehen wurden. Pro Loch wurden ca. 25 l des sauerstoffhaltigen Gases zugeführt. Maximal wurden 2 m³ pro Stunde des sauerstoffhaltigen Gases dem Abschnitt a und 1,5 m³ des sauerstoffhaltigen Gases dem Abschnitt b zugeführt. Der benötigte Sauerstoff kann beispielsweise in einer Anlage aus der umgebenden Luft, zum Beispiel mit Hilfe einer Membrantrennanlage oder einer Druckwechsel-Absorptionsanlage, erzeugt werden.

Die Abschnitte a und b wurden mit jeweils drei Meßsonden für die Sauerstoffkonzentration und die Temperatur versehen; im Abschnitt c wurden eine Sonde für die Sauerstoffkonzentration und eine Sonde für die Temperatur angeordnet. Zusätzlich wurde die Temperatur 30 cm über den Rohren mit Hilfe einer weiteren Temperatursonde gemessen. Der Gradient der Sauerstoffkonzentration in der Horizontalen wurde bei Bedarf zusätzlich mit Hilfe einer weiteren Sonde ermittelt.

Proben des Kultursubstrats wurden während der Verfahrensstufe I und während der sich anschließenden Schritte der Pilzkultivierung entnommen. Gemessen wurden der PH-Wert, der Wassergehalt und das Verhältnis zwischen mobilem und gebundenem Stickstoff. Außerdem wurden Gasproben an der Mietenoberfläche aufgefangen und auf Distickstoffoxid und Methan analysiert. Substratmaterial aus allen Mietenbereichen wurde nach Abschluß der Verfahrensstufe I der Verfahrensstufe II sowie der Pilzkultivierung zugeführt.

Es zeigte sich, daß durch die Zufuhr des sauerstoffhaltigen Gases eine bessere Verteilung der Sauerstoffkonzentration in der Miete erfolgte. Der erhöhte Sauerstoffanteil führte zu einem Stoffumsatz, der bereits nach einem kurzen Zeitraum die Sauerstoffzehrung reduzierte. Die Wärmeentwicklung wurde durch den Sauerstoff etwas gefördert. Insbesondere aber ergab sich der Vorteil, daß die Bildung von übelriechenden Stoffen in den begasten Mietenbereichen deutlich reduziert wurde, Ammonik stärker gebunden wurde und die Methan- und Distickstoffoxidbildung erheblich unterdrückt wurde. Die Pasteurisation des Substrates war deutlich erleichtert, was auf eine optimierte Stickstoffbindung unter oxidativen Bedingungen hinweist. Schließlich verlief das vegetative Wachstum des Champignons außerordentlich intensiv, desgleichen die Besiedelung der Deckerde.

## Patentansprüche

1. Verfahren zur Herstellung von Kultursubstrat aus organischen Stoffen für den Anbau von Pilzkulturen, insbesondere für den Champignonanbau, bei dem dem Kultursubstrat während des Rotteprozesses kontinuierlich oder zeitweise ein sauerstoffhaltiges Gas zugeführt wird,
**dadurch gekennzeichnet,**
**daß** das sauerstoffhaltige Gas einen gegenüber Luft erhöhten Sauerstoffgehalt, insbesondere einen Sauerstoffgehalt von 22 Vol.-% bis 30 Vol.-%, aufweist.

2. Verfahren nach Anspruch 1,
**dadurch gekennzeichnet,**
**daß** das sauerstoffhaltige Gas über mindestens eine Leitung oder Rinne dem Kultursubstrat zugeführt wird.

3. Verfahren nach Anspruch 1 oder 2,
**dadurch gekennzeichnet,**
**daß** die Sauerstoffkonzentration in dem Kultursubstrat gemessen wird und in Abhängigkeit von der gemessenen Sauerstoffkonzentration die zuzuführende Menge an Sauerstoff geregelt wird.

4. Verfahren nach einem der Ansprüche 1 bis 3,
**dadurch gekennzeichnet,**
**daß** die Temperatur in dem Kultursubstrat gemessen wird und in Abhängigkeit von der gemessenen Temperatur die zuzuführende Menge an Sauerstoff geregelt wird.

5. Verfahren nach einem der Ansprüche 1 bis 4,
**dadurch gekennzeichnet,**
**daß** das sauerstoffhaltige Gas während der Heißrotte dem Kultursubstrat zugeführt wird.

6. Verfahren nach einem der Ansprüche 1 bis 5,
**dadurch gekennzeichnet,**
**daß** das sauerstoffhaltige Gas in Intervallen für eine Zeitdauer von 10 bis 50 Minuten pro Stunde dem Kultursubstrat zugeführt wird.

7. Verfahren nach einem der Ansprüche 1 bis 6,
**dadurch gekennzeichnet,**
**daß** die Zufuhr des sauerstoffhaltigen Gases eine konventionelle Belüftung zumindest zeitweise ersetzt.

8. Vorrichtung zur Zufuhr eines sauerstoffhaltigen Gases in ein Kultursubstrat aus organischen Stoffen für den Anbau von Pilzkulturen, insbesondere für den Champignonanbau, bestehend aus mindestens einem Gebläse und mindestens einer an das Gebläse angeschlossenen Leitung oder Rinne,
**dadurch gekennzeichnet,**
**daß** der Vorrichtung eine Sauerstoffquelle und Mittel zum Eintrag von Sauerstoff in die Leitung oder Rinne zugeordnet sind.

9. Vorrichtung nach Anspruch 8,
**dadurch gekennzeichnet,**
**daß** der Vorrichtung eine Meßsonde zugeordnet ist, mit welcher die Sauerstoffkonzentration im Kultursubstrat gemessen wird und und daß der Meßsonde eine Einrichtung zugeordnet ist, mit welcher die Sauerstoffzufuhr in das Kultursubstrat in Abhängigkeit von der gemessenen Sauerstoffkonzentration geregelt wird.

10. Vorrichtung nach Anspruch 8 oder 9,
**dadurch gekennzeichnet,**
**daß** der Vorrichtung eine Meßsonde zugeordnet ist, mit welcher die Temperatur im Kultursubstrat gemessen wird und daß der Meßsonde eine Einrichtung zugeordnet ist, mit welcher die Sauerstoffzufuhr in das Kultursubstrat in Abhängigkeit von der gemessenen Temperatur geregelt wird.

11. Vorrichtung nach einem der Ansprüche 8 bis 10,
**dadurch gekennzeichnet,**
**daß** die Sauerstoffzufuhr in das Kultursubstrat mit Hilfe von mindestens einer Rohrleitung erfolgt, die Öffnungen in einem Abstand von 10 bis 100 cm und mit einem Durchmesser von 3 bis 500 mm aufweist.

12. Vorrichtung nach einem der Ansprüche 8 bis 11,
**dadurch gekennzeichnet,**
**daß** die Sauerstoffzufuhr in das Kultursubstrat mit Hilfe von mindestens zwei Rohrleitungen erfolgt, die nebeneinanderliegend in dem Kultursubstrat angeordnet sind, wobei die Rohrleitungen einen Abstand zwischen den äußeren Mantelflächen jeweils zwei benachbarter Rohrleitungen von 25 bis 120 cm aufweisen und wobei der Abstand der Rohrleitungen zu den jeweils benachbarten, äußeren Begrenzungsflächen des Kultursubstrats von 40 bis 80 cm beträgt.

## Claims

1. Process for producing a substrate consisting of organic substances for cultivating mushrooms, in particular for cultivating champignon mushrooms, in which an oxygen-containing gas is supplied continuously or from time to time to the cultivation substrate during the composting process,
**characterized in that**
the oxygen-containing gas has an oxygen content which is higher than that in air, in particular an oxygen content of from 22% by volume to 30% by volume.

2. Process according to Claim 1,
**characterized in that**
the oxygen-containing gas is supplied to the cultivation substrate by way of at least one conduit or channel.

3. Process according to Claim 1 or 2,
**characterized in that**
the oxygen concentration in the cultivation substrate is measured and the quantity of oxygen to be supplied is adjusted in dependence on the measured oxygen concentration.

4. Process according to one of Claims 1 to 3,
**characterized in that**
the temperature in the cultivation substrate is measured and the quantity of oxygen to be supplied is adjusted in dependence on the measured temperature.

5. Process according to one of Claims 1 to 4,
**characterized in that**
the oxygen-containing gas is supplied to the cultivation substrate during the hot composting.

6. Process according to one of Claims 1 to 5,
**characterized in that**
the oxygen-containing gas is supplied to the cultivation substrate at intervals for a period of from 10 to 50 minutes per hour.

7. Process according to one of Claims 1 to 6,
**characterized in that**
the supply of the oxygen-containing gas at least from time to time replaces a conventional aeration.

8. Device for supplying an oxygen-containing gas to a cultivation substrate consisting of organic substances for cultivating mushrooms, in particular for cultivating champignon mushrooms, consisting of at least one blower and at least one conduit or channel which is connected to the blower,
**characterized in that**
an oxygen source and means for feeding oxygen into the conduit or channel are assigned to the device.

9. Device according to Claim 8,
**characterized in that**
a measuring probe, which is used to measure the oxygen concentration in the cultivation substrate, is assigned to the device, and **in that** an appliance, which is used to adjust the oxygen supply to the cultivation substrate in dependence on the measured oxygen concentration, is assigned to the measuring probe.

10. Device according to Claim 8 or 9,
**characterized in that**
a measuring probe, which is used to measure the temperature in the cultivation substrate, is assigned to the device, and **in that** an appliance, which is used to adjust the oxygen supply to the cultivation substrate in dependence on the measured temperature, is assigned to the measuring probe.

11. Device according to one of Claims 8 to 10,
**characterized in that**
the oxygen is supplied to the cultivation substrate using at least one pipe conduit which possesses openings which are at a distance of from 10 to 100 cm and which has a diameter of from 3 to 500 mm.

12. Device according to one of Claims 8 to 11,
**characterized in that**
the oxygen is supplied to the cultivation substrate using at least two pipe conduits which are arranged to lie alongside each other in the cultivation substrate, with the pipe conduits having a distance of from 25 to 120 cm between the outer jacket surfaces of in each case two adjacent pipe conduits, and with the distance from the pipe conduits to the in each case adjacent, outer boundary surfaces of the cultivation substrate being from 40 to 80 cm.

## Revendications

1. Procédé de fabrication d'un substrat de culture composé de matières organiques, destiné à des cultures de champignons, en particulier des champignonnières dans lequel le substrat, pendant le processus de putréfaction reçoit en continu ou à certains moments un gaz oxygéné,
**caractérisé en ce que**
le gaz oxygéné présente, par rapport à l'air, une teneur en oxygène plus élevée, en particulier une teneur de 22 à 30 % en volume.

2. Procédé selon la revendication 1,
**caractérisé en ce que**
le gaz oxygéné est amené au substrat de culture par l'intermédiaire d'une conduite ou d'une rigole.

3. Procédé selon l'une quelconque des revendications 1 ou 2,
**caractérisé en ce que**
la concentration en oxygène dans le substrat est mesurée et le débit d'oxygène à amener est régulé en fonction de la mesure obtenue.

4. Procédé selon l'une quelconque des revendications 1 à 3,
**caractérisé en ce que**
la température est mesurée dans le substrat et le débit d'oxygène à amener est régulé en fonction de la mesure obtenue.

5. Procédé selon l'une quelconque des revendications 1 à 4,
**caractérisé en ce que**
le gaz oxygéné est amené pendant la fermentation chaude du substrat de culture.

6. Procédé selon l'une quelconque des revendications 1 à 5,
**caractérisé en ce que**
le gaz oxygéné est amené au substrat par intermittence, pendant une durée de 10 à 50 minutes par heure.

7. Procédé selon l'une quelconque des revendications 1 à 6,
**caractérisé en ce que**
l'amenée de gaz oxygéné remplace au moins par moments, une aération conventionnelle.

8. Dispositif pour amener un gaz oxygéné dans un substrat de culture composé de matières organiques pour l'exploitation de cultures de champignons, en particulier pour des champignonnières, comprenant au moins une soufflante raccordée à au moins une conduite ou une rigole,
**caractérisé en ce qu'**
à ce dispositif est associée une source d'oxygène et des moyens pour introduire de l'oxygène dans la conduite ou dans la rigole.

9. Dispositif selon la revendication 8,
**caractérisé en ce qu'**
à ce dispositif est associée une sonde de mesure par laquelle la concentration en oxygène dans le substrat de culture est mesurée, un dispositif étant associé à la sonde pour réguler l'amenée d'oxygène dans le substrat en fonction de la concentration mesurée de l'oxygène.

10. Dispositif selon l'une quelconque des revendications 8 ou 9
**caractérisé en ce qu'**
à ce dispositif est associée une sonde de mesure par laquelle la température dans le substrat de culture est mesurée, un dispositif étant associé à la sonde pour réguler l'amenée d'oxygène dans le substrat en fonction de la température mesurée.

11. Dispositif selon l'une quelconque des revendications 8 à 10,
**caractérisé en ce que**
l'amenée d'oxygène dans le substrat s'effectue à travers une conduite tubulaire qui est percée d'ouvertures espacées de 10 à 100 cm et qui présente un diamètre de 3 à 500 mm.

12. Dispositif selon l'une quelconque des revendications 8 à 11,
**caractérisé en ce que**
l'amenée d'oxygène dans le substrat est assurée par au moins deux conduites tubulaires disposées côte à côte dans le substrat, avec un espacement de 25 à 120 cm entre les surfaces externes de deux conduites voisines, tandis que la distance séparant chaque conduite des surfaces externes du substrat de culture est de 40 à 80 cm.
